# EUROPÄISCHE PATENTSCHRIFT

(11) **EP 1 555 445 B1**
(45) Veröffentlichungstag und Bekanntmachung des Hinweises auf die Patenterteilung: **29.05.2013**
(21) Anmeldenummer: 04027038.1
(22) Anmeldetag: 13.11.2004
(51) Int. Cl.: B60R 7/10, B60N 3/02, B60P 7/08, F16B 45/00

(54) **Anordnung zur Befestigung von Gegenständen an einer Wand**
Arrangement for fixing objects to a wall
Dispositif pour la fixation d'objets contre un mur

(30) Priorität: 15.01.2004 DE 102004002050
(43) Veröffentlichungstag der Anmeldung: 20.07.2005
(73) Patentinhaber: Volkswagen Aktiengesellschaft, 38440 Wolfsburg (DE)
(72) Erfinder: Fricke, Reinhard, 38440 Wolfsburg (DE); Ziehres, Bodo, 38350 Helmstedt (DE)

(56) Entgegenhaltungen:
- DE-B1- 2 911 197
- US-A- 2 222 950
- US-A- 5 676 508
- US-A- 6 076 233
- PATENT ABSTRACTS OF JAPAN Bd. 2003, Nr. 12, 5. Dezember 2003 (2003-12-05) & JP 2004 010017 A (KANTO AUTO WORKS LTD), 15. Januar 2004 (2004-01-15)

## Beschreibung

Die vorliegende Erfindung betrifft eine Anordnung zur Befestigung von Gegenständen an einer Wand gemäß dem Oberbegriffs des Patentanspruchs 1.

Haken für die Aufhängung von Gegenständen, Jacken oder Mänteln, im Innenraum eines Kraftfahrzeuges im Bereich oberhalb der Seitenscheiben zwischen der A- und B-Säule und/oder der B- und C-Säule, integriert in Haltegriffe, sind beispielsweise aus der DE 199 55 621 A1, DE 201 01 541 U1 und DE 101 19 604 C1 bekannt.

Weiterhin ist aus der DE 101 55 941 A1 eine Anordnung eines Hakens für die Aufhängung von Gegenständen in einem Kraftfahrzeug bekannt, wobei der Haken in eine Klappe eines Faches zur Aufbewahrung von Gegenständen integriert ist.

Aus der DE 197 30 562 A1 ist eine Hakeneinrichtung zur Befestigung von Einkaufstaschen und dergleichen bekannt, die im Fußraumbereich des Beifahrers abgestellt sind, um diese vor dem Umfallen auch in scharfen Kurven zu sichern. Die Hakeneinrichtung ist um ca. 180 Grad zwischen einer Nichtgebrauchsstellung und einer Gebrauchsstellung schwenkbar.

Weiterhin sind aus dem Stand der Technik Haken bekannt, die in dem Kofferraum von Kombis und Limousinen angeordnet sind, um auch dort Gegenstände aufhängen zu können. Als nachteilig bei diesen Anordnungen von Haken erweist sich, dass diese Haken in der Regel als separate Bauteile ausgeführt sind, wodurch zusätzliche Fertigungskosten für das Vorsehen eines Haken entstehen. Als Beispiel für solche Haken können die EP 1 132 257 A2 und DE 94 05 306 U1 dienen.

Aus der DE 199 13 745 A1 ist ein Kleiderhaken in einem Kraftfahrzeug bekannt, der sich von der Gebrauchslage in die Nichtgebrauchslage in den Dachhimmel oder in die Seitenverkleidung gradlinig hineinschieben läßt und der einen sehr kleinen Einbauraum benötigt. Nachteilig kann an dieser Ausführungsform die relativ große Einbautiefe sein.

Ausklappbare Ösen zum Verzurren von Gegenständen in Kraftfahrzeugen sind beispielsweise aus der DE 35 22 393 A1, DE 295 00 242 U1 und EP 1 123 838 A2 bekannt. Ebenso wie die oben genannten Haken sind auch die Verzurrösen als separate Bauteile ausgeführt.

Ferner offenbart die DE 29 11 197 B1 einen Haltegriff, insbesondere bügelartigen Griff für den Innenraum von Kraftfahrzeugen. Dieser weist einen Befestigungssockel auf, dem wiederum eine Aufnahme zugeordnet ist, die als Teil einer Kupplung mit einem komplementären Teil der Kupplung zusammenwirkt, welches seinerseits als Halter für ein Ausrüstungsteil bzw. einen Gebrauchsgegenstand ausgebildet ist (Becherhalter, Haken, Bolzen, Dorn, Zwischenkupplung). Aus der US 5 676 508 A ist eine Verzurrvorrichtung für Lastkraftwagen, Boote oder andere Fahrzeuge bekannt, welche einstückig einen Sockel sowie einen obenliegenden Doppelhaken mit zentraler Bohrung zum Verzurren aufweist und mit dem Fahrzeug verschraubbar ist. Aus der US 2 222 950 A ist ein mittels einer Verankerungslasche an einem Karosserierahmen eines Fahrzeugs relativ zur Verankerungslasche schwenkbarer Haltebügel bekannt. An der Verankerungslasche kann ein Haken fest angeordnet sein. Die JP 2004 010017 A beschreibt ein stabförmiges Griffteil, welches von einer Nichtgebrauchs- in eine Gebrauchsposition und zurück schwenkbar ist. An dem Griffteil sind ein Schirmhalter und eine Mehrzahl Haken relativ zum Griffteil schwenkbar befestigt. Aus der US 6 076 233 A ist schließlich eine schwenkbare Griffleiste bekannt, in welche ein relativ zur Griffleiste schwenkbarer Haken integriert ist. Dem Haken ist eine federbelastete Rastvorrichtung zugeordnet, welche es gestattet, durch manuelle Betätigung des Hakens denselben unabhängig von der Stellung der Griffleiste in verschiedenen Betriebsstellungen (Gebrauchs- und Nichtgebrauchsposition) an einem Schwenkzapfen zu fixieren.

Es ist Aufgabe der Erfindung, eine an einer Wand vorzusehende Anordnung zur Befestigung von Gegenständen zu schaffen, die die Wahlmöglichkeit zwischen mindestens zwei unterschiedlichen Befestigungs- beziehungsweise Haltemitteln an ein und der selben Stelle bietet.

Die Aufgabe wird erfindungsgemäß mit den Merkmalen des Anspruchs 1 gelöst. Vorteilhafte Ausführungen beschreiben die Unteransprüche.

Aus dem Stand der Technik sind zwar verschiedene Haken und verschiedene Ösen bekannt, jedoch sind dies des öfteren separate Bauteile an unterschiedlichen Einbaustellen. Oft wird aber an ein und der selben Stelle einmal ein Haken und ein anderes Mal eine Öse gebraucht. Wenn zum Beispiel im Kofferraum ein Haken gebraucht wird und nur eine Öse vorhanden ist, nützt ein Haken an einer anderen Stelle im Fahrzeug wenig.

Der Kern der Erfindung gemäß Anspruch 1 ist es daher, für sich bekannte Haken und für sich bekannte Ösen zu einem Bauteil zusammenzufassen. Durch Integration von Haken und Öse in ein einziges Bauteil, welche obendrein starr miteinander verbunden sind, wird zum einen vermieden, dass der Haken beziehungsweise die Öse als zusätzliches Teil ausgeführt ist. Zum anderen wird der Platzbedarf im Innenraum des Kraftfahrzeugs reduziert. Wichtig in diesem Zusammenhang ist auch die Reduzierung des Montageaufwandes.

Vorteilhafterweise läßt sich dieses Bauteil wechselweise in eine Gebrauchsposition und eine Nichtgebrauchsposition jeweils eines seiner Bereiche verschwenken. Da wie schon beschrieben, entweder der Haken oder die Öse an ein und derselben Stelle gebraucht wird, läßt sich zweckmäßigerweise das erfindungsgemäße Bauteil entweder in die Gebrauchsposition des Hakens, die Gebrauchsposition der Öse oder in die Nichtgebrauchsposition des Bauteils verschwenken, in der sich der Haken und die Öse in ihrer Nichtgebrauchsposition befinden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Figur 1: eine Ansicht einer erfindungsgemäßen Anordnung,
- Figur 2: den Schnitt A-A durch die erfindungsgemäße Anordnung,
- Figur 3: den Schnitt B-B durch die erfindungsgemäße Anordnung,
- Figur 4: eine perspektivische Explosionsdarstellung von vorne,
- Figur 5: eine Explosionsdarstellung von der Einbauseite gesehen,
- Figur 6 und 7: ein weiteres Aufführungsbeispiel der erfindungsgemäßen Anordnung.

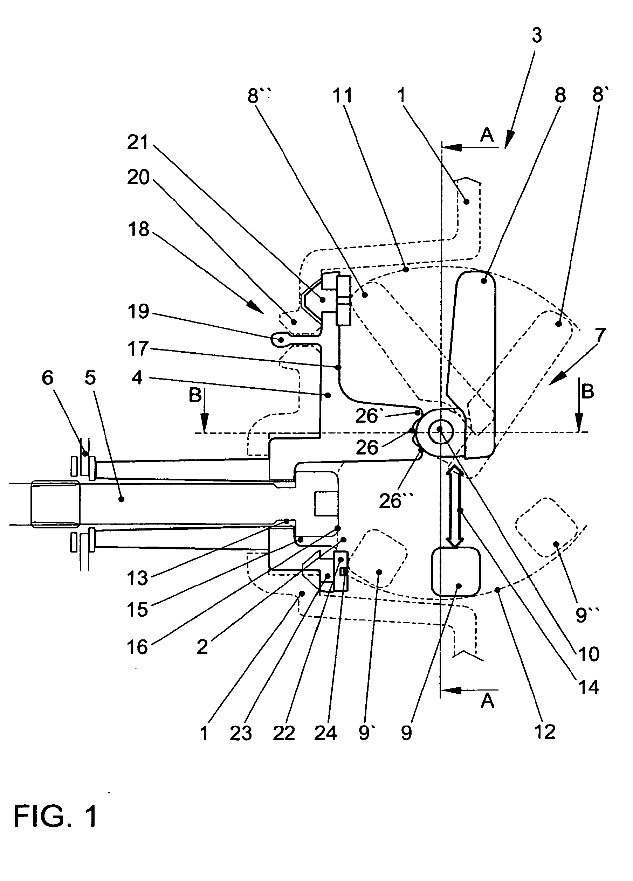

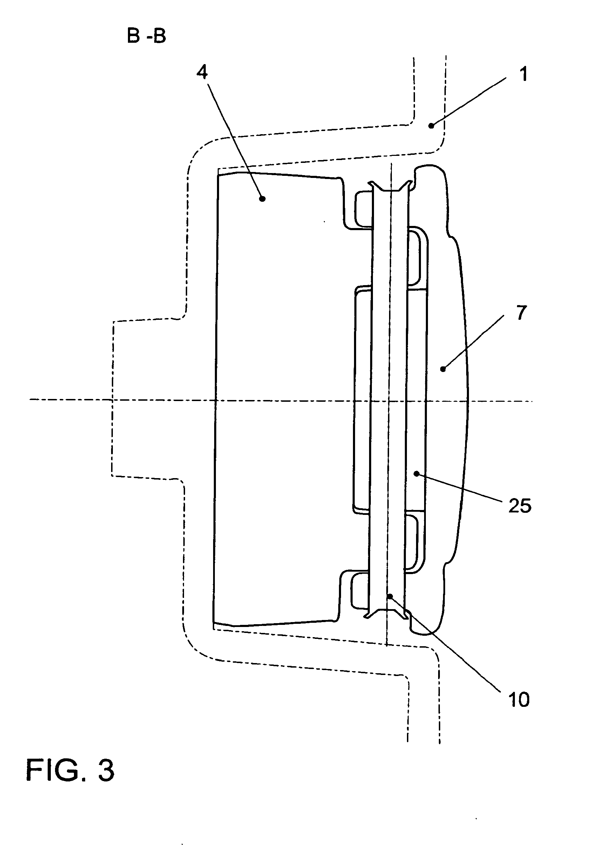

In den Figuren 1 bis 3 ist eine Wand 1, die zum Beispiel ein Teil einer Seitenverkleidung sein kann, mit einer topfartigen Aufnahme 2 dargestellt. In die topfartige Aufnahme 2 ist eine Anordnung 3 eingebaut. Diese, die eigentliche Erfindung darstellende Anordnung 3 umfaßt einen Halter 4, der mit Hilfe einer Schraube 5 im Rohbau 6 befestigt ist, und ein Bauteil 7. Die Schraube 5 ist vorteilhafterweise als Innenkantschraube, wie zum Beispiel Torx oder Inbus, ausgebildet, sie kann aber auch eine Kreuz- oder Schlitzschraube sein. Das Bauteil 7 besteht aus einem hakenförmigen Bereich 8 und einem ösenförmigen Bereich 9. Der hakenförmige Bereich 8 und der ösenförmige Bereich 9 sind in diesem Ausführungsbeispiel gemeinsam schwenkbar um eine horizontal verlaufende Schwenkachse 10 gelagert und liegen sich bezüglich der Schwenkachse 10 diametral gegenüber. Wenn das Bauteil 7 wie in diesem Ausführungsbeispiel an einer mehr oder weniger senkrechten Wand 1 montiert ist, befindet sich der hakenförmige Bereich 8 oberhalb und der ösenförmige Bereich 9 untereinander beiderseits der gemeinsamen Schwenkachse 10. Der hakenförmige Bereich 8 schwenkt entlang des Schwenkkreises 11 und der ösenförmigen Bereich 9 entlang des Schwenkkreises 12 in jeweils mindestens drei verschiedene Arretierpositionen: In einer ersten Arretierposition befindet sich sowohl der hakenförmige Bereich 8 als auch der ösenförmige Bereich 9 in der Nichtgebrauchsposition (dargestellt mit einer durchgehenden Umrißlinie). Das Bauteil 7 bildet in dieser Nichtgebrauchsposition einen mehr oder weniger flachen Abschluß mit der Wand 1. In einer anderen Arretierposition befindet sich der hakenförmige Bereich 8 in seiner bei 8' wiedergegebenen Gebrauchsposition, der ösenförmige Bereich 9 dagegen in seiner bei 9' angedeuteten Nichtgebrauchsposition. In einer dritten Arretierposition befindet sich schließlich der hakenförmige Bereich 8 in der Nichtgebrauchsposition 8" und der ösenförmige Bereich 9 in seiner Gebrauchsposition 9". Die letzteren beiden Positionen sind durch eine gestrichelte Umrißlinie dargestellt.

Während in dem beschriebenen Ausführungsbeispiel die beiden Bereiche 8 und 9 ein einziges Bauteil 7 bilden, also starr miteinander verbunden sind, können die beiden Bereiche 8 und 9 in einem anderen hier nicht dargestellten und nicht zum Gegenstand der Erfindung gehörigen Ausführungsbeispiel auch durch individuelle Teile gebildet sein, so dass das Bauteil 7 dann gleichsam zweiteilig ist. Diese beiden Teile sind dann unabhängig voneinander um die Schwenkachse 10 schwenkbar, so dass sich beide in der Gebrauchsposition beziehungsweise der Nichtgebrauchsposition befinden können. Während man in dem Ausführungsbeispiel der Figuren 1 bis 3 den gewünschten Bereich 8 oder 9 durch Druck auf den der Schwenkachse 10 gegenüberliegenden Bereich 8 beziehungsweise 9 aufklappen kann, muß bei dieser Ausführungsform ein Griff oder ähnliches vorhanden sein, um beispielsweise den Haken herausziehen zu können.

Vorteilhafterweise weist der Halter 4 ein Loch 13 für die Schraube 5 hinter dem ösenförmigen Bereich 9 auf, weil ein Monteur dann die Schraube 5 mit einem Schraubendreher beziehungsweise mit einem Innenkantschlüssel durch eine Öffnung 14 im ösenförmigen Bereich 9 anziehen und so den Halter 4 am Rohbau 6 befestigen kann. Diese Öffnung 14 bildet hier auch die Öse an sich. Der Halter 4 besitzt im unteren Bereich, das heißt im ösenförmigen Bereich 9, eine Vertiefung 15, und die Schraube 5 weist einen Schraubenkopf 16 auf, wobei vorteilhafterweise die Vertiefung 15 so dimensioniert ist, dass sie den Schraubenkopf 16 komplett aufnehmen kann, so dass die Oberseite des Schraubenkopfs 16 mit der Oberfläche 17 des Halters 4 abschließt.

Um das Loch 13 für die Montage genau vor der Öffnung für die Schraube 5 zu positionieren, weist die erfindungsgemäße Anordnung 3 im Halter 4 eine Clipsverbindung 18 auf, die in die Wand 1 einclipst. Die Clipsverbindung 18 besteht in diesem Ausführungsbeispiel aus einem Rastzapfen 19, der einstückig mit dem Halter 10 verbunden ist, und Rastnasen 20 in der Wand 1.

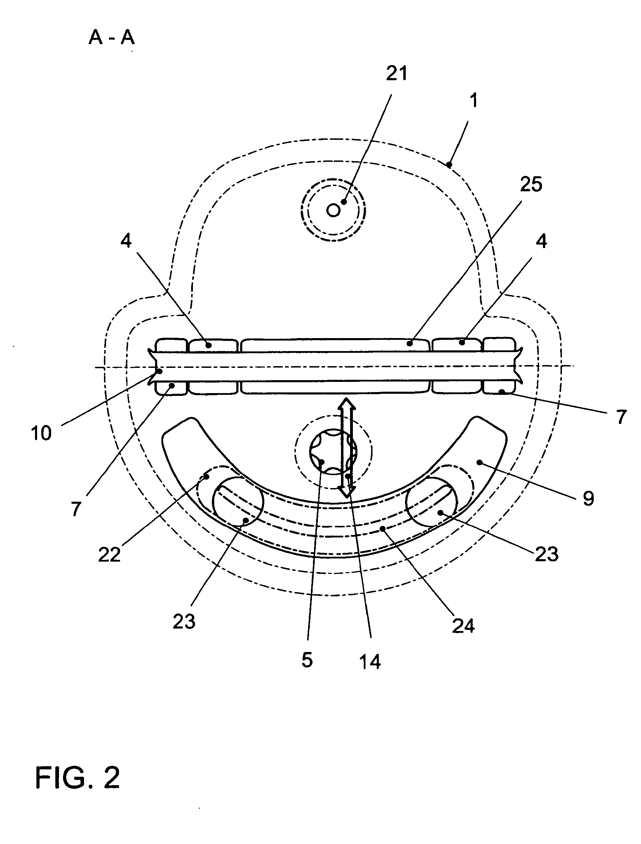

Da das Bauteil 7 und der Halter 4 beide vorteilhafterweise aus einem harten Werkstoff gefertigt sind, sind in dem Halter 4 noch zwei Anschlagpuffer 21 und 22 eingeclipst. In der Nichtgebrauchsposition 8" des hakenförmigen Bereichs liegt dieser am Anschlagpuffer 21 an, in der Nichtgebrauchsposition 9' des ösenförmigen Bereichs liegt dieser am Anschlagpuffer 22 an. Der Anschlagpuffer 21 ist rund und der Anschlagpuffer 22 hat eine bogenförmige Form, genaugenommen die eines Kreisringabschnitts (siehe insbesondere Figur 2). Der bogenförmige Anschlagpuffer 22 weist zwei Pfropfen 23, die in den Halter 4 einrasten, und eine bogenförmige Vertiefungsrille 24 auf, die hier auch die Form eines Kreisringabschnitts hat.

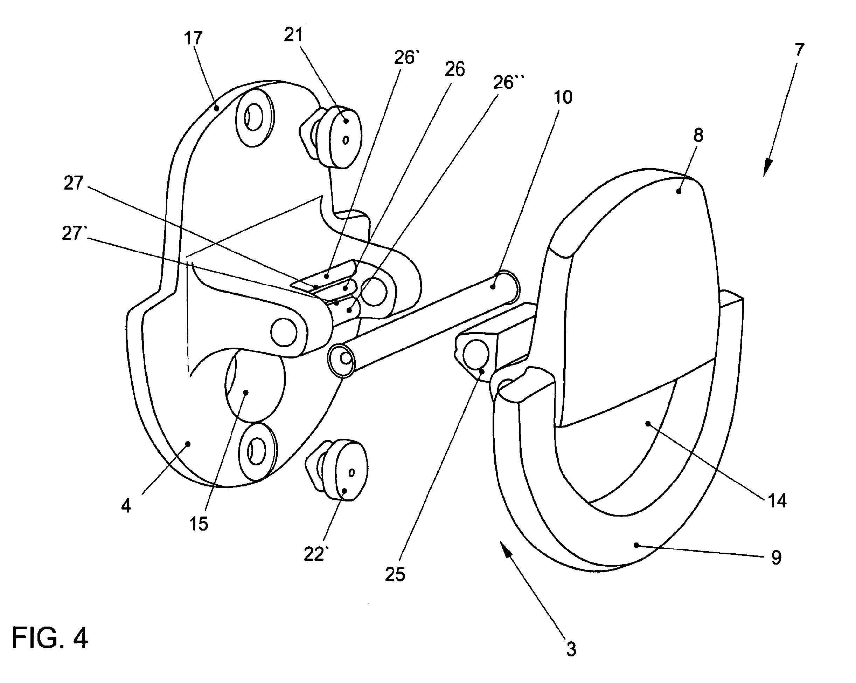

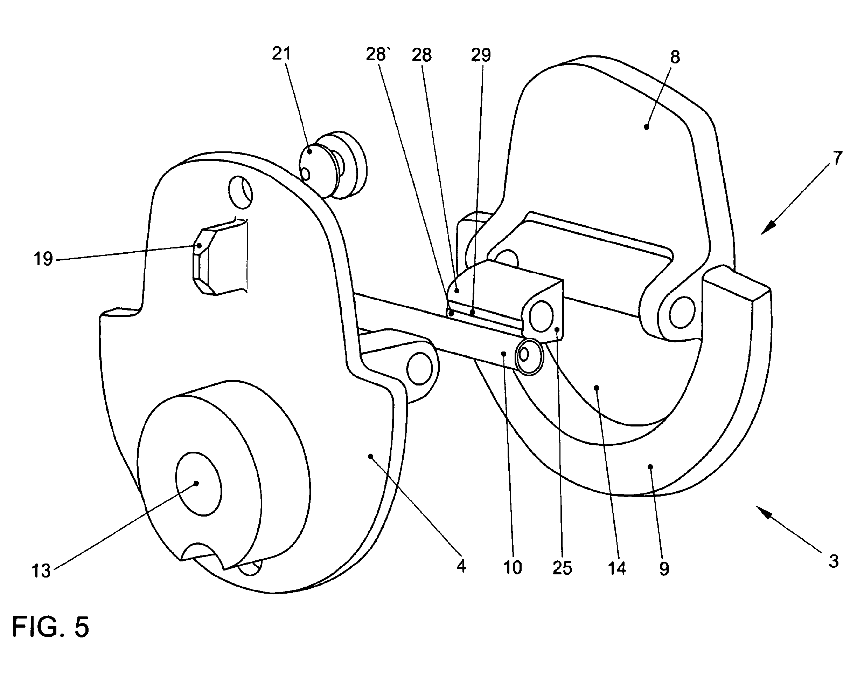

In den Figuren 4 und 5 ist die erfindungsgemäße Anordnung 3 jeweils in einer Explosionsdarstellung gezeigt. Figur 4 zeigt die Anordnung von vorne, also vom Fahrzeuginneren aus gesehen und Figur 5 von hinten, also von der Seite, die im eingebauten Zustand nicht mehr sichtbar ist. Während der Anschlagpuffer 22 in den Figuren 2 bis 3 bogenförmig ausgebildet ist, ist der Anschlagpuffer 22' in der Figur 4 rund.

Weil das harte Bauteil 7 schlecht mit dem ebenfalls harten Halter 4 verrasten kann, wird in den mittleren Bereich der Schwenkachse 10 ein Verraster 25 aus einem weicheren und nachgiebigeren Material montiert, der mit dem Bauteil 7 zusammen um die Schwenkachse 10 schwenkt. Um in den drei verschiedenen Arretierpositionen verrasten zu können, befinden sich am Halter 4 drei Rastnasen 26, 26' und 26" und zwei Vertiefungsrillen 27 und 27' (Figur 4). Der Verraster 25 weist zwei Rastnasen 28 und 28' und eine Vertiefungsrille 29 auf. In der Nichtgebrauchsstellung sowohl des hakenförmigen Bereichs 8 als auch des ösenförmigen Bereichs 9 rastet die Rastnase 26 in die Vertiefungsrille 29, die Rastnase 28 in die Vertiefungsrille 27 und die Rastnase 28' in die Vertiefungsrille 27' ein. In der Gebrauchsstellung 8' des hakenförmigen Bereichs rastet die Rastnase 26' in die Vertiefungsrille 29 und in der Gebrauchsstellung 9" des ösenförmigen Bereichs die Rastnase 26" in die Vertiefungsrille 29 ein.

Der hakenförmige Bereich 8 eignet sich ähnlich wie in der schon eingangs erwähnten DE 197 30 562 A1 insbesondere zum Einhängen von Taschen, damit diese im befüllten Zustand nicht umfallen. Der ösenförmige Bereich 9 eignet sich besonders zum Einhaken von Gepäcknetzen, Gummispannern, oder ähnlichen Befestigungs- oder Ladegutsicherungseinrichtungen.

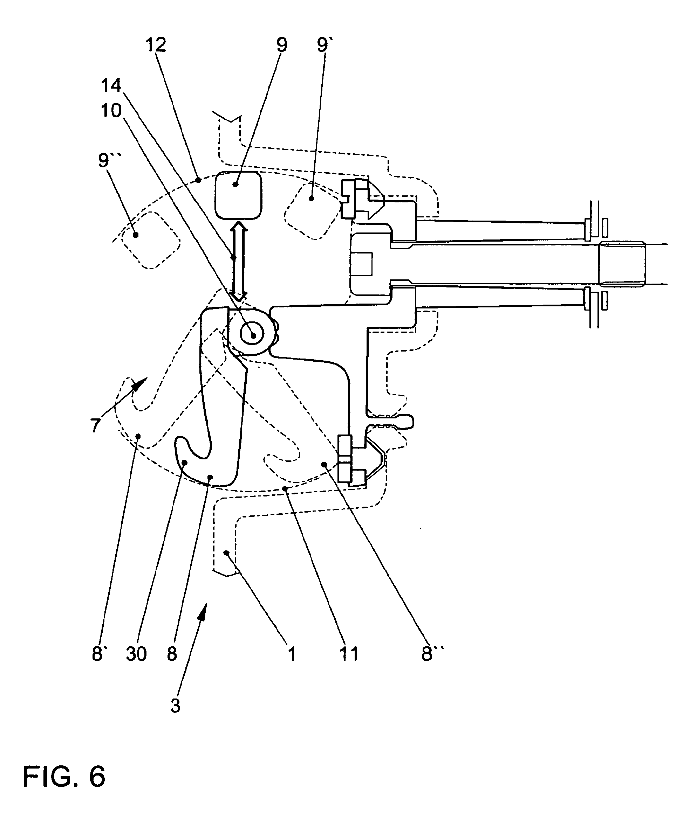

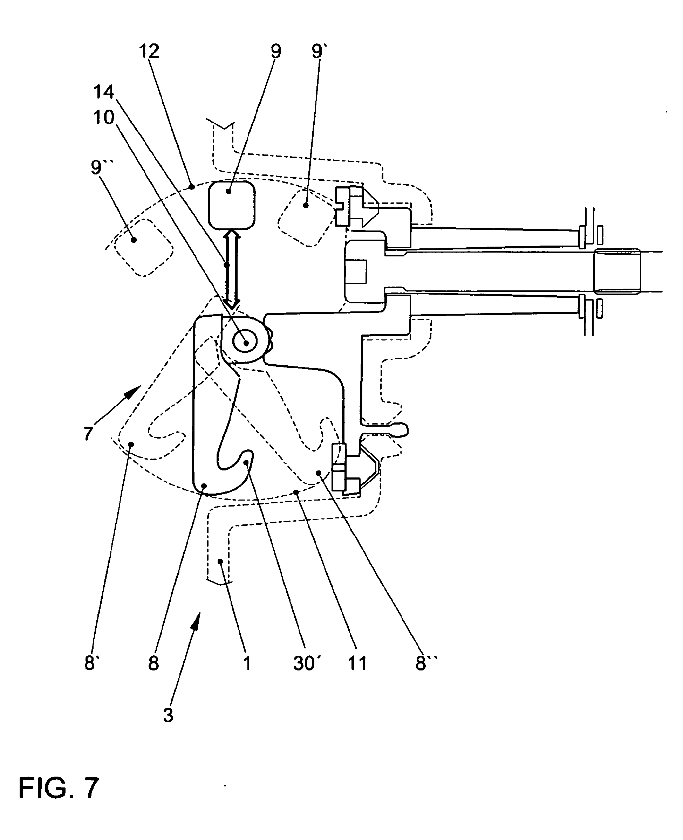

Während im Ausführungsbeispiel der Figuren 1 bis 3 die Anordnung 3 so in der Wand 1 montiert wird, dass sich innerhalb des Bauteils 7 der hakenförmige Bereich 8 oben und der ösenförmige Bereich 9 unten befindet, ist in den beiden verschiedenen Ausführungsbeispielen der Figuren 6 und 7 der ösenförmige Bereich 9 oben und der hakenförmige Bereich 8 unten. Der hakenförmige Bereich 8 weist in der Figur 6 einen nach außen gebogenen Haken 30 und in der Figur 7 einen nach innen gebogenen Haken 30' auf. Diese ungekehrte Montage in diesem Ausführungsbeispiel im Vergleich zum Ausführungsbeispiel der Figuren 1 bis 3 rührt daher, weil im Ausführungsbeispiel der Figuren 1 bis 3 der Haken durch Abklappen des hakenförmigen Bereichs 8 nach außen bebildet wird und beim vorliegenden Ausführungsbeispielen der Figuren 6 und 7 die Haken 30 und 30' schon fertig ausgebildet sind.

Die erfindungsgemäße Anordnung bietet somit eine kostengünstige und praktische Wahlmöglichkeit zwischen zwei unterschiedlichen Befestigungs- beziehungsweise Haltemitteln an ein und der selben Stelle.

### BEZUGSZEICHENLISTE

- 1: Wand
- 2: topfartige Aufnahme
- 3: Anordnung
- 4: Halter
- 5: Schraube
- 6: Rohbau
- 7: Bauteil
- 8: hakenförmiger Bereich
- 8',: Gebrauchsposition des hakenförmigen Bereichs 8
- 8": Nichtgebrauchsposition des hakenförmigen Bereichs 8
- 9: ösenförmiger Bereich
- 9': Nichtgebrauchsposition des ösenförmigen Bereichs 9
- 9": Gebrauchsposition des ösenförmigen Bereichs 9
- 10: Schwenkachse
- 11: Schwenkkreis
- 12: Schwenkkreis
- 13: Loch im Halter 4
- 14: Öffnung im ösenförmigen Bereich 9
- 15: Vertiefung des Halters 4
- 16: Schraubenkopf
- 17: Oberfläche des Halters 4
- 18: Clipsverbindung
- 19: Rastzapfen
- 20: Rastnasen
- 21, 22, 22': Anschlagpuffer
- 23: Pfropfen
- 24: Vertiefungsrille
- 25: Verraster
- 26, 26', 26": Rastnase
- 27,27': Vertiefungsrille
- 28, 28': Rastnase
- 29: Vertiefungsrille
- 30,30': Haken

## Patentansprüche

1. Anordnung (3) zur Befestigung von Gegenständen an einer Wand (1), umfassend ein Bauteil (7) mit einem ösenförmigen (9) und einem hakenförmigen Bereich (8), wobei die beiden Bereiche (8, 9), ein einziges Bauteil (7) bildend, starr miteinander verbunden sind, **dadurch gekennzeichnet, dass** die Bereiche (8, 9) jeweils durch Verschwenkung des Bauteils (7) wechselweise in eine Gebrauchsposition (8', 9") und eine Nichtgebrauchsposition (8, 8", 9, 9') bewegbar sind.

2. Anordnung (3) nach Anspruch 1, **dadurch gekennzeichnet, dass** der hakenförmige Bereich (8) durch Druck auf den ösenförmigen Bereich (9) in seine Gebrauchsposition (8') klappbar ist.

3. Anordnung (3) nach Anspruch 1 oder 2, **dadurch gekennzeichnet, dass** der ösenförmige Bereich (9) durch Druck auf den hakenförmigen Bereich (8) in seine Gebrauchsposition (9") klappbar ist.

4. Anordnung (3) nach einem der Ansprüche 1 bis 3, **dadurch gekennzeichnet, dass** das Bauteil (7) in vorgegebenen Positionen (8, 8', 8" bzw. 9, 9', 9") arretierbar ist.

5. Anordnung (3) nach Anspruch 4, **dadurch gekennzeichnet, dass** eine der Arretierpositionen die Gebrauchsposition (8') des hakenförmigen Bereichs (8) ist.

6. Anordnung (3) nach Anspruch 4 oder 5, **dadurch gekennzeichnet, dass** eine der Arretierpositionen die Gebrauchsposition (9") des ösenförmigen Bereichs (9) ist.

7. Anordnung (3) nach einem der Ansprüche 4 bis 6, **dadurch gekennzeichnet, dass** eine der Arretierpositionen eine Position des Bauteils (7) ist, in der sich sowohl der hakenförmige Bereich (8) auch der ösenförmige Bereich (9), in einer Nichtgebrauchsposition (8, 8", 9, 9') befinden.

8. Anordnung (3) nach einem der Ansprüche 1 bis 7, **dadurch gekennzeichnet, dass** das Bauteil (7) zwischen den beiden Bereichen (8, 9) eine Schwenkachse (10) aufweist.

9. Anordnung (3) nach Anspruch 8, **dadurch gekennzeichnet, dass** die Schwenkachse (10) in einer topfartigen Aufnahme (2) querverlaufend gelagert ist.

10. Anordnung (3) nach Anspruch 4 und Anspruch 8 oder 9, **dadurch gekennzeichnet, dass** der Schwenkachse (10) überdrückbare Verrastungen (26, 26', 26", 27, 27', 28, 28', 29) zur Definition der Arretierpositionen zugeordnet sind.

11. Anordnung (3) nach einem der Ansprüche 1 bis 10, **dadurch gekennzeichnet, dass** zumindest einem der Bereiche (8, 9) ein Anschlagpuffer (21, 22, 22') für die Nichtgebrauchsposition (8", 9') zugeordnet ist.

12. Anordnung (3) nach einem der Ansprüche 9 bis 11, **dadurch gekennzeichnet, dass** die topfartige Aufnahme (2) zumindest einen Anschlagpuffer (21, 22, 22') für das Bauteil (7) bildet.

## Claims

1. Arrangement (3) for fixing objects to a wall (1), comprising a component (7) with an eye-shaped region, (9) and a hook-shaped region (8), wherein the two regions (8, 9), forming a single component (7), are rigidly connected to each other, **characterized in that** the regions (8, 9) are in each case movable alternately into a use position (8', 9") and a non-use position (8, 8", 9, 9') by pivoting of the component (7).

2. Arrangement (3) according to Claim 1, **characterized in that** the hook-shaped region (8) is foldable into the use position (8') thereof by pressure being applied to the eye-shaped region (9).

3. Arrangement (3) according to Claim 1 or 2, **characterized in that** the eye-shaped region (9) is foldable into the use position (9") thereof by pressure being applied to the hook-shaped region (8).

4. Arrangement (3) according to one of Claims 1 to 3, **characterized in that** the component (7) is lockable in predetermined positions (8, 8', 8" or 9, 9', 9").

5. Arrangement (3) according to Claim 4, **characterized in that** one of the locking positions is the use position (8') of the hook-shaped region (8).

6. Arrangement (3) according to Claim 4 or 5, **characterized in that** one of the locking positions is the use position (9") of the eye-shaped region (9).

7. Arrangement (3) according to one of Claims 4 to 6, **characterized in that** one of the locking positions is a position of the component (7), in which both the hook-shaped region (8) and the eye-shaped region (9) are in a non-use position (8, 8", 9, 9').

8. Arrangement (3) according to one of Claims 1 to 7, **characterized in that** the component (7) has a pivot axis (10) between the two regions (8, 9).

9. Arrangement (3) according to Claim 8, **characterized in that** the pivot axis (10) is mounted running transversely in a cup-like receptacle (2).

10. Arrangement (3) according to Claim 4 and Claim 8 or 9, **characterized in that** the pivot axis (10) is assigned latching means (26, 26', 26", 27, 27', 28, 28', 29) which can be pressed thereover in order to define the locking position.

11. Arrangement (3) according to one of Claims 1 to 10, **characterized in that** at least one of the regions (8, 9) is assigned a stop buffer (21, 22, 22') for the non-use position (8", 9').

12. Arrangement (3) according to one of Claims 9 to 11, **characterized in that** the cup-like receptacle (2) forms at least one stop buffer (21, 22, 22') for the component (7).

## Revendications

1. Agencement (3) pour la fixation d'objets contre un mur (1), comprenant un composant (7) ayant une région en forme d'oeillet (9) et une région en forme de crochet (8), les deux régions (8, 9), formant un composant unique (7), étant connectées rigidement l'une à l'autre, **caractérisé en ce que** les régions (8, 9) peuvent à chaque fois être déplacées par pivotement du composant (7) de manière sélective dans une position d'utilisation (8', 9") et une position de non utilisation (8, 8", 9, 9').

2. Agencement (3) selon la revendication 1, **caractérisé en ce que** la région en forme de crochet (8) peut être rabattue par pression sur la région en forme d'oeillet (9) dans sa position d'utilisation (8').

3. Agencement (3) selon la revendication 1 ou 2, **caractérisé en ce que** la région en forme d'oeillet (9) peut être rabattue par pression sur la région en forme de crochet (8) dans sa position d'utilisation (9").

4. Agencement (3) selon l'une quelconque des revendications 1 à 3, **caractérisé en ce que** le composant (7) peut être bloqué dans des positions prédéfinies (8, 8', 8" respectivement 9, 9', 9").

5. Agencement (3) selon la revendication 4, **caractérisé en ce que** l'une des positions de blocage est la position d'utilisation (8') de la région en forme de crochet (8).

6. Agencement (3) selon la revendication 4 ou 5, **caractérisé en ce que** l'une des positions de blocage est la position d'utilisation (9") de la région en forme d'oeillet (9).

7. Agencement (3) sur l'une quelconque des revendications 4 à 6, **caractérisé en ce que** l'une des positions de blocage est une position du composant (7) dans laquelle la région en forme de crochet (8) ainsi que la région en forme d'oeillet (9) se trouvent dans une position de non utilisation (8, 8", 9, 9').

8. Agencement (3) selon l'une quelconque des revendications 1 à 7, **caractérisé en ce que** le composant (7) présente un axe de pivotement (10) entre les deux régions (8, 9).

9. Agencement (3) selon la revendication 8, **caractérisé en ce que** l'axe de pivotement (10) est monté de manière à s'étendre transversalement dans un logement en forme de pot (2).

10. Agencement (3) selon la revendication 4 et selon la revendication 8 ou 9, **caractérisé en ce que** l'axe de pivotement (10) est associé à des encliquetages pouvant être enfoncés (26, 26', 26", 27, 27', 28, 28', 29) pour la définition des positions de blocage.

11. Agencement (3) selon l'une quelconque des revendications 1 à 10, **caractérisé en ce qu'**au moins l'une des régions (8, 9) est associée à un tampon de butée (21, 22, 22') pour la position de non utilisation (8", 9').

12. Agencement (3) selon l'une quelconque des revendications 9 à 11, **caractérisé en ce que** le logement en forme de pot (2) forme au moins un tampon de butée (21, 22, 22') pour le composant (7).
